# EUROPÄISCHE PATENTSCHRIFT

(11) **EP 0 496 101 B1**
(45) Veröffentlichungstag und Bekanntmachung des Hinweises auf die Patenterteilung: **12.03.1997**
(21) Anmeldenummer: 91122071.3
(22) Anmeldetag: 21.12.1991
(51) Int. Cl.: C01C 1/02, C02F 11/06, C01B 17/50, C01B 21/02

(54) **Verfahren zur thermischen Aufarbeitung ammoniumsulfathaltiger Rückstände insbesondere ammoniumsulfathaltiger Abwässer**
Process for the thermal treatment of ammonium sulfate containing wastes especially ammonium sulfate containing waste-waters
Procédé pour traitement thermique de déchets contenant de sulfates d'ammoniac, particulièrement de déchets liquides aqueux contenant des sulfates d'ammonium

(30) Priorität: 19.01.1991 DE 4101497
(43) Veröffentlichungstag der Anmeldung: 29.07.1992
(73) Patentinhaber: BASF Aktiengesellschaft, 67063 Ludwigshafen (DE)
(72) Erfinder: Becker, Rolf, Dr., W-6940 Weinheim (DE); Bruhn, Jens, W-6700 Ludwigshafen (DE); Seifert, Helmut, Dr., W-6800 Mannheim 1 (DE); Steinebrunner, Klaus, Dr., W-6945 Hirschberg (DE); Leuckel, Wolfgang, Prof. Dr., W-6702 Bad Duerkheim 1 (DE)

(56) Entgegenhaltungen:
- EP-A- 0 091 679
- FR-A- 2 125 328
- GB-A- 1 029 748
- GB-A- 1 033 235
- US-A- 3 761 575
- US-A- 3 954 955

## Beschreibung

Die Erfindung betrifft ein Verfahren zur thermischen Aufarbeitung ammoniumsulfathaltiger Rückstände, insbesondere ammoniumsulfathaltiger Abwässer, bei dem die Rückstände zusammen mit Brennstoffen und Oxidationsmittel über ein zentrales Düse/Brennersystem in eine Brennkammer eingebracht und bei reduzierenden und oxidierenden Reaktionsbedingungen und Temperaturen zwischen 600°C und 2000°C umgesetzt werden.

Zur Darstellung der Erfindungs-Gattung ist im Oberbegriff des Patentanspruchs von einem bekannten Verfahren im Sinne der GB-A-1 029 748 ausgegangen, nach dem bisher Rückstände, welche Ammoniumsulfat enthalten, in einem Ofen bei einer Temperatur im Bereich von 850°C und 1150°C unter Bildung eines Schwefeldioxid und Stickstoff enthaltenden Gases aufgearbeitet werden. Dabei wird die Verbrennung der Rückstände so gelenkt, daß sich ein thermisches Cracken ergibt. Hierzu wird der Ofen mit kohlenstoffhaltigen Brennstoffen beheizt. Das Verbrennen des Ammoniumsulfats erfolgt in einem einstufigen Prozess.

Aus der DE-A-21 07 910 ist ein Verfahren zum Verbrennen von Ammoniumsulfat zu Schwefeldioxid, Wasserdampf und Stickstoff bekannt. Es wird ausschließlich festes, feinteiliges Ammoniumsulfat, welches durch einen Luftstrom über eine Lanze einem Verbrennungsraum zugeführt wird, verbrannt. Die Verbrennung erfolgt ebenfalls in einem einstufigen Prozess, bei Temperaturen zwischen 800°C und 1250°C, derart, daß die aus dem Verbrennungsraum austretenden Gase eine Sauerstoffkonzentration von 1 bis 10 Vol.-% enthalten.

Es ist weiterhin bekannt, Rückstände in einem mehrstufigen Verfahren aufzuarbeiten. Nach der EP-A-29 583 werden Abfallschwefelsäuren, Säureteere und ähnliche Schwefel und Kohlenstoff enthaltende Abfallprodukte unterschiedlicher Zusammensetzung und Konsistenz in einem vierstufigen Verbrennungsprozeß aufgearbeitet. Hierzu wird ein Verbrennungsofen verwendet, welcher aus einem Drehrohrofen mit einem Koksbett, einer Zwischenkammer und einer Nachbrennkammer mit zwei Sekundär-Lufteinblasungen für die dritte und vierte Stufe besteht. Die Zersetzung der Rückstände in den einzelnen Stufen erfolgt durch entsprechende Zufuhr von Primär- und Sekundärluft.

Der Erfindung lag die Aufgabe zugrunde, in der chemischen Industrie anfallende Rückstände, insbesondere Abwässer mit hohem Ammoniumsulfatgehalt zu entsorgen und dabei die Stockoxidemissionen zu minimieren.

Zur Lösung dieser Aufgabe werden die Merkmale nach dem Kennzeichen des Patentanspruchs vorgeschlagen.

Erfindungsgemäß wird das zu entsorgende Abwasser mit Hilfe einer zentral im eigentlichen Brenner sitzenden Zerstäuberlanze, die ein- oder mehrflutig ausgeführt sein kann, unmittelbar in die eigentliche Reaktionszone eingegeben. Zur Einbringung der erforderlichen Wärme, i.d. R. werden Temperaturen um 1000°C angestrebt, in die Brennkammer wird Stützbrennstoff, z. B. Erdgas, Schweröl, Kohlenstaub etc., verfeuert. Als Oxidationsmittel kann Luft, mit Sauerstoff angereicherte Luft oder reiner Sauerstoff verwendet werden. Als mögliches Zerstäubungsmedium kann z. B. Dampf, Stickstoff oder ein Teil des Oxidationsmittels (Luft, mit Sauerstoff angereicherte Luft oder reiner Sauerstoff) oder bei Verwendung eines gasförmigen Brennstoffs (z. B. Erdgas) ein Teilstrom des Brennstoffs eingesetzt werden. Da das aufzuarbeitende Abwasser direkt in die Reaktionszone der Flamme eingegeben wird, in der lokal sehr hohe Temperaturen (2000°C und mehr) vorliegen können und in der aufgrund von Mischungsabläufen zwischen Brennstoff und Oxidationsmittel sowohl Bereiche mit reduzierenden als auch mit oxidierenden Bedingungen vorliegen, werden im Brennernahbereich Bedingungen geschaffen, die eine thermische Aufarbeitung des ammoniumsulfathaltigen Abwassers begünstigen. Allerdings muß durch entsprechende Gestaltung des Düse/Brennsystems und durch geeignete Reaktionsführung dafür gesorgt werden, daß sich auch im Falle der Eindüsung des ammoniumsulfathaltigen Abwassers über den gesamten Betriebs- bzw. Regelbereich des Verbrennungssystems eine stabil brennende Flamme ausbildet.

Es wurde nun gefunden, daß eine thermische Aufarbeitung von ammoniumsulfathaltigen Rückständen, insbesondere ammoniumsulfathaltiger Abwässer, in zwei Stufen bei reduzierenden und bei oxidierenden Reaktionsbedingungen möglich ist. Dabei ist anzustreben, daß sich in der Brennkammer eine Temperatur von ungefähr 1000°C eingestellt. Je nach Fahrweise und Auslegung des verwendeten Düse/ Brennersystems ergeben sich Grenzen in der zulässigen Beaufschlagung, d. h. der Mengeneinheit ammoniumsulfathaltigen Abwassers (kg), die pro Einheit der eingebrachten Brennstoffe, z. B. Normkubikmeter m³) in die Reaktionszone eingebracht werden kann. Auch ist der Brennkammertyp, die Art der Brennkammergestaltung sowie die Verbrennungsführung innerhalb des Systems zu berücksichtigen. Bei der Einhaltung dieser Grenzen, die vom jeweiligen Düse/Brenner/Brennraumsystem vorgegeben werden, ist eine weitgehende Umsetzung des ammoniumsulfathaltigen Abwassers möglich. Besonderes Augenmerk muß auf die Verbrennungsführung gelegt werden, denn nur durch entsprechende Wahl der Reaktionsbedingungen sind niedrige NO-Emissionen erreichbar.

Nach der Erfindung können sowohl ammoniumsulfathaltige Rückstände als auch ammoniumsulfathaltige Abwässer thermisch aufgearbeitet werden. Insbesondere ammoniumsulfathaltige Abwässer können auch mit Konzentrationen über der Löslichkeit "verbrannt" werden. Dabei erfolgt die Verbrennung in zwei Stufen, wobei in der ersten Stufe bei reduzierender Verbrennungsführung ein H₂S- und COS-haltiges Rauchgas entsteht. Bei der oxidierender Verbrennungsführung in der zweiten Stufe entsteht ein SO₂-haltiges Rauchgas, das sich in einer nachgeschalteten regenerativen Rauchgasreinigung (z. B. Wellmann-Lord-Verfahren) abtrennen und beispielsweise zu Flüssig-SO₂ bzw. zu Schwefelsäure weiterverarbeiten läßt.

### Beispiel

Eindüsung eines ammoniumsulfathaltigen Abwassers über einen Brenner mit einer zentral sitzenden Zerstäubungslanze in eine adiabate, vertikal angeordnete 2-stufig ausgeführte Brennkammer in der durch entsprechende Verbrennungsführung in der ersten Verbrennungsstufe reduzierende Bedingungen (λ < 1,0) und in einer weiter stromab liegenden zweiten Verbrennungsstufe oxidierende (λ > 1,0) Bedingungen eingestellt werden.

Als Brennstoff wird Erdgas eingesetzt, als Oxidationsmittel wird Luft verwendet. In der ersten Verbrennungsstufe wird bei einer Luftzahl von λ ≈ 0,8 das Sulfat zersetzt. Es entsteht ein H₂S- und COS-haltiges Rauchgas. In der zweiten Verbrennungsstufe wird durch Einblasen von weiterer Luft dafür gesorgt, daß sich oxidierende Bedingungen (λ = 1,04) einstellen. Durch diese Nachverbrennung entsteht ein SO₂-haltiges Rauchgas, das wiederaufgearbeitet werden kann.

Diese Variante ermöglicht, daß sowohl H₂S bzw. COS-haltiges Rauchgas als auch SO₂-haltiges Rauchgas erzeugt werden kann. Dadurch kann flexibel auf die Bedürfnisse der Gasabnehmer eingegangen werden.

Ein weiterer Vorteil dieser Variante ist, daß geringere NOₓ-Emissionen auftreten. Bei einer Beaufschlagung von 1,5 kg Abwasser/m³ Brennstoff ergibt sich eine NOₓ-Emission von ungefähr 450 ppm. Dies bedeutet, daß bei dieser 2-stufigen Fahrweise lediglich 10 % des eingebrachten Stickstoffs zu NO umgewandelt werden.

## Patentansprüche

1. Verfahren zur thermischen Aufarbeitung ammoniumsulfathaltiger Rückstände, insbesondere ammoniumsulfathaltiger Abwässer, bei dem die Rückstände zusammen mit Brennstoffen und Oxidationsmittel über ein zentrales Düse/Brennersystem in eine Brennkammer eingebracht und bei reduzierenden und oxidierenden Reaktionsbedingungen und Temperaturen zwischen 600°C und 2000°C umgesetzt werden, dadurch gekennzeichnet, daß die Aufarbeitung der Rückstände in der Brennkammer in zwei Stufen erfolgt, wobei in der ersten Stufe unter reduzierender Verbrennungsführung bei einer Luftzahl λ ≈ 0,8 das in den Rückständen enthaltene Ammoniumsulfat in H₂S- und COS-haltige Rauchgase und der im Ammoniumsulfat gebundene Stickstoff in N₂ überführt werden, und wobei in der zweiten Stufe unter oxidierender Verbrennungsführung bei einer Luftzahl λ ≈ 1,04 das H₂S und COS zu SO₂ umgesetzt werden.

## Claims

1. A process for the thermal treatment of wastes containing ammonium sulphate, in particular wastewaters containing ammonium sulphate in which the wastes together with fuels and oxidants are introduced via a central nozzle/burner system into a combustion chamber and are reacted under reduced and oxidizing reaction conditions at from 600°C to 2000°C, wherein the treatment of the wastes in the combustion chamber is carried out in two stages, where, in the first stage under reducing combustion conditions at an air index λ ≈ 0.8, the ammonium sulphate present in the wastes is converted into H₂S- and COS-containing flue gases and the nitrogen bound in the ammonium sulphate is converted into N₂, and where, in the second stage under oxidizing combustion conditions at an air index λ ≈ 1.04, the H₂S and COS are converted into SO₂.

## Revendications

1. Procédé de traitement thermique de résidus contenant du sulfate d'ammonium, plus particulièrement, des eaux résiduaires contenant du sulfate d'aluminium, conformément auquel on introduit les résidus, en même temps que des combustibles et des agents d'oxydation par l'intermédiaire d'un système à tuyère/brûleur central dans une chambre de combustion et on les fait réagir dans des conditions réactionnelles réductrices et oxydantes et à des températures comprises entre 600°C et 2000°C, caractérisé en ce que l'on entreprend le traitement des résidus dans la chambre de combustion en deux stades, où, dans le premier stade et sous conduite réductrice de la combustion, on transforme, à un indice d'air λ ≈ 0,8, le sulfate d'ammonium contenu dans les résidus en gaz de fumé contenant H₂S et COS et l'azote lié dans le sulfate d'ammonium en N₂ et où, dans le second stade et sous une conduite oxydante de la combustion, on convertit, sous un indice d'air λ ≈ 1,04, le H₂S et le COS en SO₂.
